# EUROPEAN PATENT SPECIFICATION

(11) **EP 3 034 395 B1**
(45) Date of publication and mention of the grant of the patent: **27.06.2018**
(21) Application number: 15197422.7
(22) Date of filing: 02.12.2015
(51) Int. Cl.: B64C 21/06, B64D 41/00, B64D 33/02

(54) **AIRCRAFT BOUNDARY LAYER REMOVAL WITH AUXILLIARY POWER UNIT SUCTION**
FLUGZEUGGRENZSCHICHTENTFERNUNG MIT HILFSTRIEBWERKSANSAUGEN
ÉLIMINATION DE LA COUCHE LIMITE D'AÉRONEF AVEC ASPIRATION UNITÉ D'ALIMENTATION AUXILIAIRE

(30) Priority: 15.12.2014 US 201462091962 P
(43) Date of publication of application: 22.06.2016
(73) Proprietor: Rolls-Royce Corporation, Indianapolis, Indiana 46225-1103 (US)
(72) Inventor: Khalid, Syed J., PALM BEACH GARDENS, FL 33418 (US)
(74) Representative: Ström & Gulliksson AB

(56) References cited:
- EP-A2- 2 072 398
- EP-A2- 2 540 624
- DE-A1- 3 626 972
- GB-A- 1 212 875
- US-A- 2 659 552

## Description

### FIELD OF TECHNOLOGY

The present disclosure relates to gas turbine engines, and more particularly, but not exclusively, to an auxiliary power unit configured within an aircraft fuselage configured to remove boundary layer flow from an air flow surface to reduce drag. More particularly, a design and method to utilize the auxiliary power unit to selectively remove boundary layer flow or a freestream air feed is disclosed.

### BACKGROUND

Aircraft utilize gas turbine engines for propulsion as well as energy generation utilized in aircraft operation. In addition, it is known to utilize auxiliary power units to provide additional energy generation needed by the aircraft to power electrical power demands in the aircraft including landing gear actuation and control surface actuation. In addition, composite aircraft construction will likely require powering heat pumps to pump out heat as they may be substantially more insulated from the outside atmosphere. Finally, it may be desirable to power reverse thrust assemblies directly from an auxiliary power unit for improved effectiveness over conventional thrust reversers.

As the number of systems that utilize the auxiliary power unit expand, and their corresponding energy draw increases, the need for larger and more powerful auxiliary power units will increase. The use of powerful auxiliary power units in ultra-bypass ratio turbofans to power dedicated thrust reverse assemblies may further their increase. The larger and often heavier auxiliary power units may decrease the efficiency of the aircraft operation if not counterbalanced by increases in efficiency elsewhere.

Overcoming the efficiency concerns associated with the use of larger auxiliary power units would be helpful, could provide for improve aircraft operation, and could provide for the continued expansion and development of systems that rely on the auxiliary power unit for operational electrical power.

GB 1 212 875 discloses an aircraft and relates to means for providing a combined thrust boost and auxiliary power unit for an aircraft.

DE 36 26 972 discloses an air inlet system for aircrafts.

EP 2 540 624 discloses an aircraft auxiliary power unit assembly.

According to the present disclosure, there is provided an apparatus and method of removing a boundary layer from an air flow surface of an aircraft, as set forth in the appended claims.

### BRIEF DESCRIPTION OF THE DRAWINGS

While the claims are not limited to a specific illustration, an appreciation of the various aspects is best gained through a discussion of various examples thereof. Referring now to the drawings, exemplary illustrations are shown in detail. Although the drawings represent the illustrations, the drawings are not necessarily to scale and certain features may be exaggerated to better illustrate and explain an innovative aspect of an example. Further, the exemplary illustrations described herein are not intended to be exhaustive or otherwise limiting or restricted to the precise form and configuration shown in the drawings and disclosed in the following detailed description. Exemplary illustrations are described in detail by referring to the drawings as follows:
FIG. 1 schematically illustrates some aspects of one non-limiting example of a gas turbine engine in accordance with one non-limiting exemplary embodiment of the present disclosure;
FIG 2 schematically illustrates some aspects of one non-limiting example of an aircraft assembly according to one non-limiting exemplary embodiment of the present disclosure;
FIG. 3 schematically illustrates some aspects of one non-limiting example of an aircraft assembly illustrated in FIG. 2, the aircraft assembly illustrated showing flow to an auxiliary power unit removing a boundary layer from an airflow surface;
FIG 4 is an illustration of the aircraft assembly illustrated in FIG. 3, the aircraft assembly illustrated showing flow to an auxiliary power unit from a freestream air feed;
FIG 5 is an illustration of the aircraft assembly illustrated in FIG. 3, the aircraft assembly illustrated showing a variable moving member proportioning flow to an auxiliary power unit from the airflow surface and the freestream feed; and
FIG 6 schematically illustrates some aspects of one non-limiting example of an aircraft assembly illustrated in FIG. 2, the aircraft assembly illustrated showing removal of a boundary layer from an engine intake surface.

### DETAILED DESCRIPTION

An aircraft assembly is described herein and is shown in the attached drawings. Gas turbine engines are utilized as exterior engines for propulsion. An auxiliary power unit, which itself may comprise a gas turbine engine, is positioned within the fuselage of the aircraft. The auxiliary power unit is selectively fed intake air from a freestream air feed during landing when thrust reversing is required or during high power requirements, from the low pressure regions of the main engine inlets during high angle of attack operations to reduce inlet distortion losses, or from aircraft/nacelle boundary layer ports to reduce drag during climb and cruise of the aircraft. The present disclosure describes such a system. In addition, the present disclosure describes a method of balancing the reduction of drag with the need for electrical power production from the auxiliary power unit.

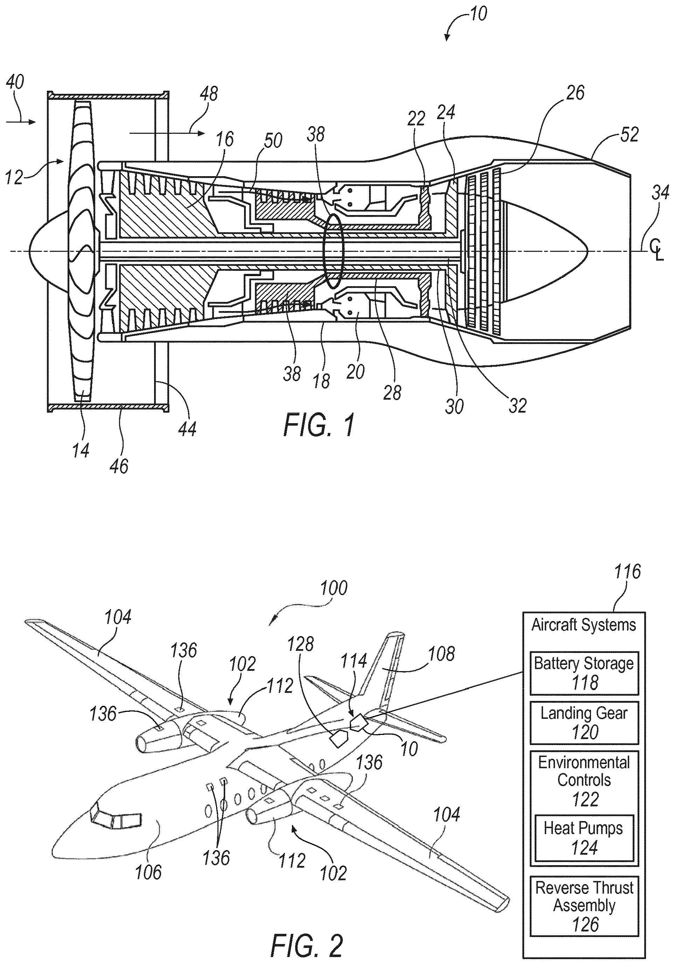

Figure 1 illustrates a gas turbine engine 10, which includes a fan 12, a low pressure compressor 14 ("LP compressor"), intermediate pressure compressor 16 ("IP compressor"), a high pressure compressor 18 ("HP compressor"), a combustor 20, a high pressure turbine 22 ("HP turbine"), an intermediate pressure turbine 24 ("IP turbine") and low pressure turbine 26 ("LP turbine"). The HP compressor 18, the IP compressor 16 and the LP compressor 14 are connected to a respective one of an HP shaft 28, an IP shaft 30 and an LP shaft 32, which in turn are connected to a respective one of the HP turbine 22, the IP turbine 24 and the LP turbine 26. The shafts extend axially and are parallel to a longitudinal center line axis 34. Additionally, two or more of these shafts and an outer body structure 36 ("body") are rotatably connected to one another by an intershaft bearing assembly 38. While Figure 1 illustrates a three shaft engine, it will be appreciated that other embodiments can have configurations including more or less than three shafts. During general operation of the engine 10, ambient air 40 enters the fan 12 and is directed across a fan rotor 42 in an annular duct 44, which in part is circumscribed by fan case 46. The bypass airflow 48 provides a fraction of engine thrust while the primary gas stream 50 is directed to the combustor 20 and the turbines 20, 22, 24, and then exhausted through a nozzle 52 generating thrust.

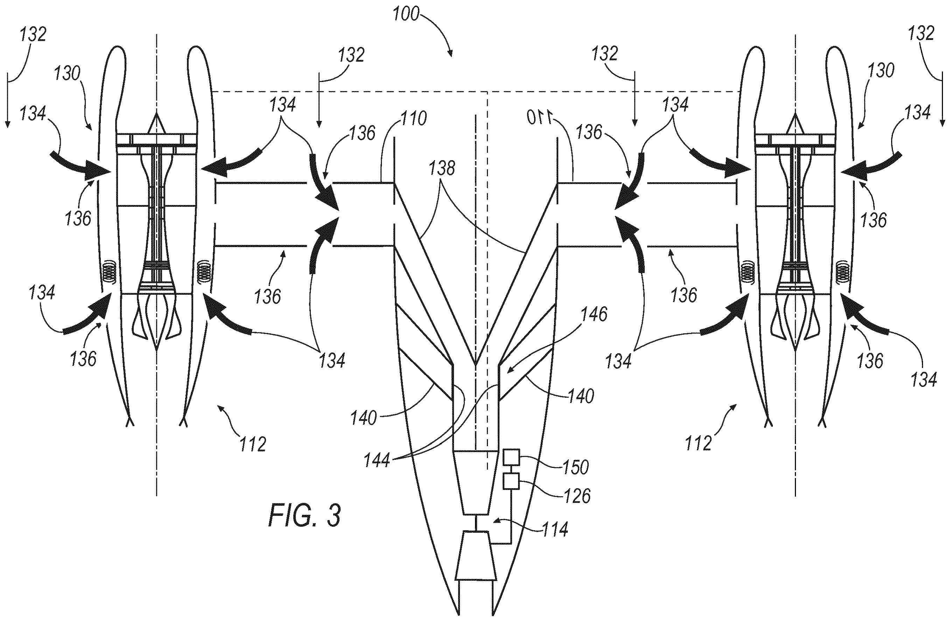

Figure 2 illustrates an aircraft assembly 100 incorporating the gas turbine engine 10 of Figure 1. The aircraft assembly 100 utilizes gas turbine engines 10 in the form of external engines 102 mounted on the aircraft assembly 100 to produce propulsion for flight. The external engines 102 may be mounted directly to a wing 104 as illustrated or may be mounted to a variety of aircraft structures, such as the fuselage 106 or tail assembly 108. The external engines 102 may even be mounted to these structures indirectly such as through the use of a pylon 110 as illustrated in Figure 3. The external engines 102, in one non-limiting exemplary example, may be housed within nacelles 112. In addition to the external engines 102, the aircraft assembly may include at least one auxiliary power unit 114 for producing electrical power to a variety of aircraft assembly systems 116. These systems may include, but are not limited to battery storage 118, landing gear systems 120, environmental control systems 122, heat pumps 124, and reverse thrust assemblies 126. The auxiliary power unit 114 may be comprised of a gas turbine engine 10 coupled to a generator 128. In one non-limiting exemplary example, it is contemplated that the auxiliary power unit 114 may be positioned within the fuselage 106 of the aircraft.

As the number of aircraft assembly systems 116 that rely on the auxiliary power unit 114 increase, the required size and capacity of the auxiliary power unit 114 may increase as well. In addition, composite fuselage materials may require the use of heat pumps 124 to expel excess heat within the cabin. Dedicated reverse thrust assemblies 126 may rely on the auxiliary power unit 114 for power during the landing of the aircraft 100. It would be desirable to counterbalance the effects of a larger and possibly heavier auxiliary power unit 114 by improving the efficiency of the aircraft performance. The present disclosure, therefore, contemplates utilizing the auxiliary power unit 114 to improve aircraft efficiency by harnessing its suction to remove the aircraft surface/engine inlet boundary layer.

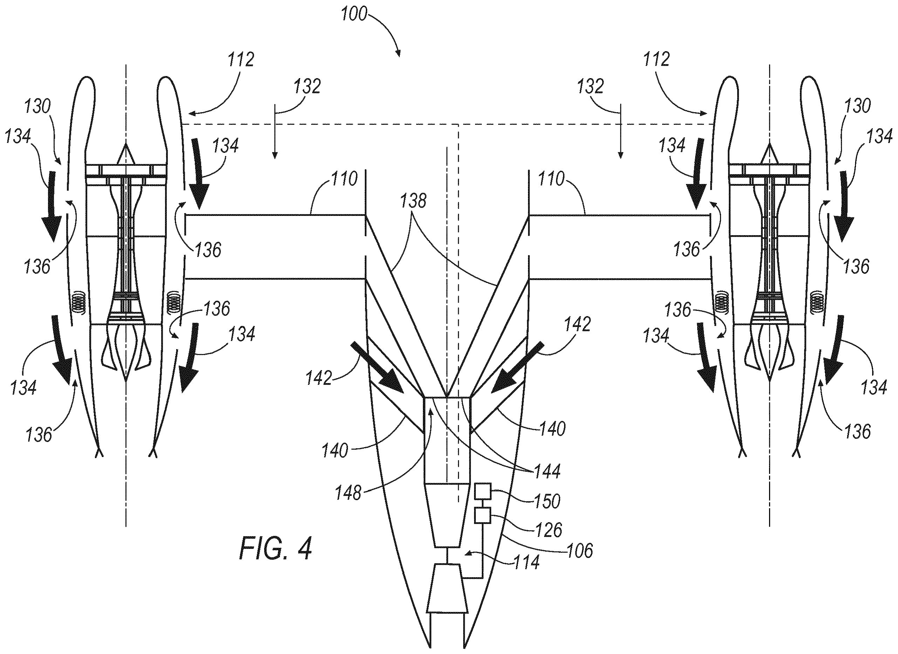

Figure 3 is a non-limiting exemplary embodiment of the current disclosure. The auxiliary power unit 114 is positioned within the fuselage 106 of the aircraft. The outer surface of the aircraft 100 defines an airflow surface 130 over which air 132 flows during operation of the aircraft 100. The air 132 forms a boundary layer 134 along the airflow surface 130. The airflow surface 130 may include a plurality of boundary layer bleed slots 136 formed therein. In Figure 3, the boundary layer bleed slots 136 are formed in the nacelles 112 and the pylons 110. It should be understood, however, that the boundary layer bleed slots 136 may be formed in any of the aircraft 100 exterior surfaces including, but not limited to the wings 104 and the fuselage 106 itself. A first conduit 138 is positioned between the airflow surfaces 130 and the auxiliary power unit 114. A second conduit 140 is positioned between the auxiliary power 114 and a freestream air feed 142 (see Figure 4). A movable member 144 is positioned between the auxiliary power unit 114 and the first and second conduits 138, 140 to switch from one source to the other.

The movable member 144 is configured to be moved between a first position 146 that provides for the passage of at least a portion of the boundary layer 134 from the airflow surface 130, through the first conduit 138, to the auxiliary power unit 114 (see Figure 3) and a second position 148 that provides passage of the freestream air feed 142, through the second conduit 140, to the auxiliary power unit 114 (see Figure 4). When the movable member 144 is in the first position 146, the auxiliary power unit 114 is fed from the boundary layer 134. The suction from the auxiliary power unit 114 pulls in the boundary layer 134, which in turn reduces aerodynamic drag of the aircraft 100. Although this may be desirable in any number of situations, one exemplary example contemplates configuring the movable member 144 into the first position 146 during climbing and cruising of the aircraft 100. In another exemplary example, the movable member 144 may be in the first position 146 anytime the maximum output of the auxiliary power unit 114 is not desired. The auxiliary power unit 114 will generate power at a lower rate when fed from the first conduit 138 and may therefore be utilized to charge the batteries 118 or power other systems not requiring peak output.

As shown in Figure 4, when the movable member 144 is in the second position 148, the auxiliary power unit 114 draws air from a freestream air feed 142. The freestream air feed 142 is contemplated to include any free flow of air from the exterior of the aircraft 100. This allows the auxiliary power unit 114 to operate unimpeded and maximize electrical power generation. Although this may be desirable in a variety of situations, one exemplary example contemplates configuring the movable member 144 into the second position 148 during takeoff and landing of the aircraft 100 when electrical demands of aircraft assembly systems 116 may be highest. In another exemplary example, the movable member 144 may be in the second position 148 anytime the maximum output of the auxiliary power unit 114 is desired. In one exemplary example, the auxiliary power unit 114 is used to power a dedicated reverse thrust assembly 126 such as a dedicated reverse thrust fan 150 during landing of the aircraft. The auxiliary power unit 114 may power the dedicated reverse thrust fan 150 either electrically or through a mechanical connection. In another exemplary example, it is contemplated that such a dedicated reverse thrust fan 150 may be powered by the auxiliary power unit 114 and operated in a positive thrust direction, in combination with the external engines 102, during periods when increased thrust is desired.

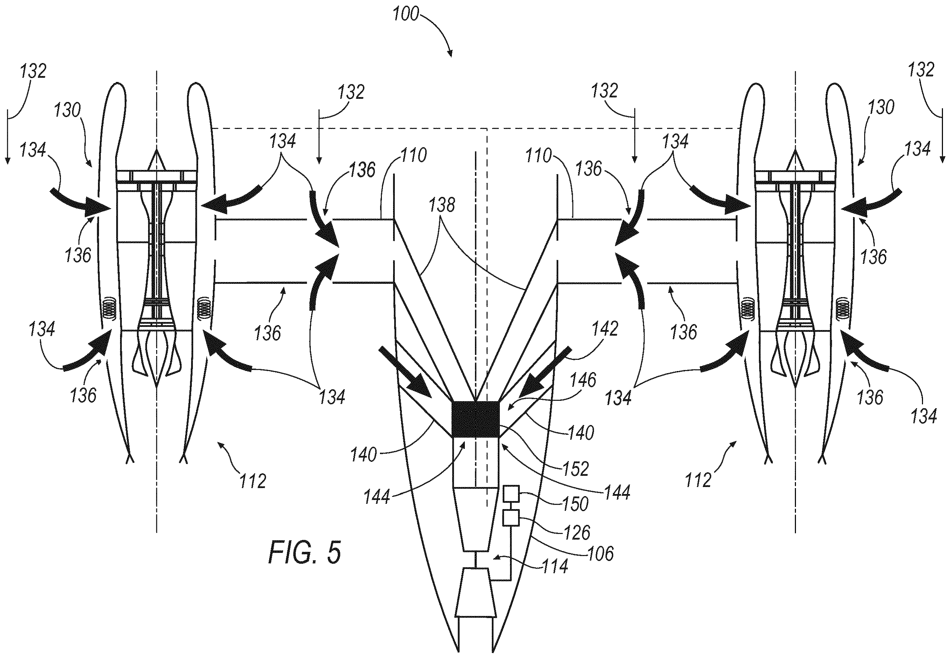

Figure 5 illustrates an alternate exemplary example, wherein the movable member 144 is comprised of a variable position member 152. The variable position member 152 is configured to proportion the flow of air into the auxiliary power unit 114 from both the first conduit 138 and the second conduit 140. This allows the boundary layer 134 to be at least partially removed during all periods of operation when short of the maximum power from the auxiliary power unit 114 is required. Additionally, it allows proportioned flow from the second conduit 140 to be supplied in amounts sufficient for the auxiliary power unit 114 to provide current draw requirements at all times. The use of a proportioned flow allows the reduction of friction, through boundary layer removal, and the generation of power from the auxiliary power unit 114 to be optimized continuously during aircraft 100 operation.

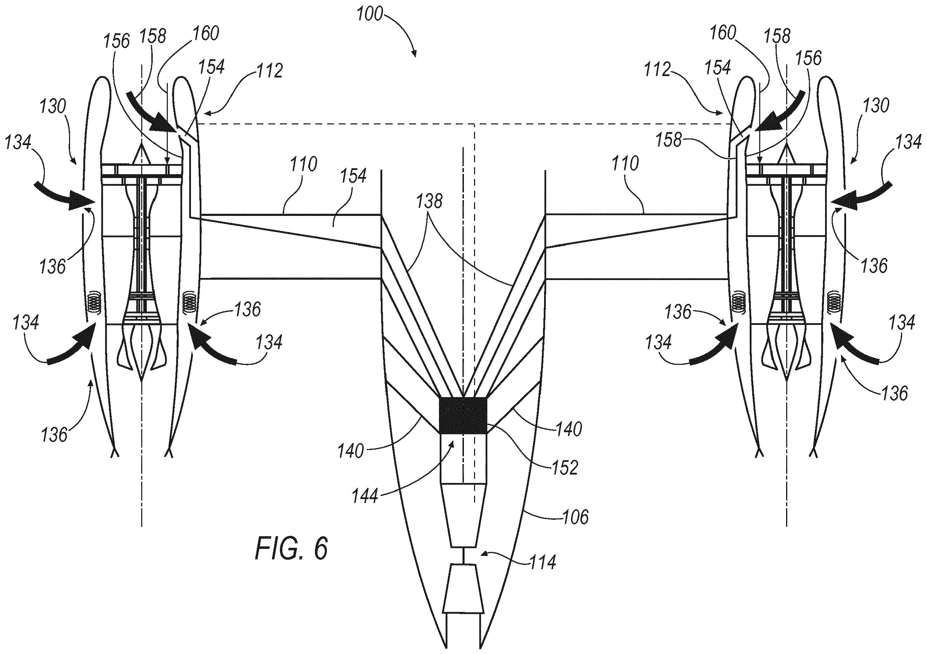

Figure 6 illustrates still another alternate exemplary example, wherein the auxiliary power unit 114 is in further communication with a third conduit 154 in communication with an engine intake surface 156. The engine intake surface 156 has a second boundary layer 158 of air moving across it. The moveable member 144, which may comprise a variable position member 152, is positioned between the third conduit 154 and the auxiliary power unit 114. The moveable member 144 is configured to allow the second boundary later 158 of air to feed the auxiliary power unit 114 during takeoff of the aircraft. By removing the second boundary layer 158, the engine intake air 160 is conditioned and can reduce inlet flow distortion during takeoff to increase thrust and stall margin. In an exemplary example, the variable position member 152 proportions the feed into the auxiliary power unit 114 from both the third conduit 154 and the first conduit 138 during climb of the aircraft. This allows proper conditioning of the engine intake air 160 while additionally reducing drag.

## Claims

1. An apparatus (100) comprising:
an auxiliary power unit (114) for positioning within a fuselage (106) of an aircraft, said aircraft comprising an air flow surface (130, 156) having a boundary layer (134, 158) of moving fluid when external air (132) is flowed along the airflow surface (130, 156);
a first conduit (138) between the auxiliary power unit (114) and the air flow surface (130, 156);
a second conduit (140) between the auxiliary power unit (114) and a freestream air feed (142); and **characterised in** further comprising: a movable member (144, 152) configured to move between a first position (146) that provides for the passage of the at least a portion of the boundary layer (134, 158) through the first conduit (138) to the auxiliary power unit (114) during at least one of climb and cruise of the aircraft, and to a second position (148) that provides for a passage of the freestream air feed (142) through the second conduit (140) to the auxiliary power unit (114) during at least one of takeoff and landing of the aircraft.

2. An apparatus (100) as claimed in claim 1, further comprising:
a plurality of boundary layer bleed slots (136) positioned on the air flow surface (130) and placing the first conduit (138) in communication with the boundary layer (134).

3. An apparatus (100) as claimed in claim 2, wherein the plurality of boundary layer bleed slots (136) are position on at least one of a nacelle (112) and a pylon (110).

4. An apparatus (100) claimed in any one of claims 1 to 3, wherein the movable member (144, 152) is configured to move to the second position (148) to provide for the passage of the freestream air feed (142) through the second conduit (140) to the auxiliary power unit (114) during a thrust reversing mode of the aircraft.

5. An apparatus (100) as claimed in any one of the preceding claims, further comprising:
an engine intake surface (156) having a second boundary layer (158) of moving fluid moving across it; and
a third conduit (154) between the auxiliary power unit (114) and the engine intake surface (156), the movable member (144, 152) configured to move to a third position that provides for the passage of the at least a portion of the second boundary layer (158) through the third conduit (154) to the auxiliary power unit (114) during takeoff of the aircraft.

6. An apparatus (100) as claimed in claim 5, wherein the movable member (144, 152) comprises a variable position member (152) proportioning flow from both the first conduit (138) and the third conduit (154) into the auxiliary power unit (114).

7. An apparatus (100) as claimed in any one of the preceding claims, further comprising:
at least one thrust reverse assembly (126) in communication with the auxiliary power unit (114), the auxiliary power unit (114) powering the thrust reverse assembly (126) during landing of the aircraft.

8. An apparatus (100) as claimed in claim 7, wherein the auxiliary power unit (114) powers the at least one thrust reverse assembly (126) electrically.

9. An apparatus (100) as claimed in claim 7, wherein the auxiliary power unit (114) powers the at least one thrust reverse assembly (126) mechanically.

10. An apparatus (100) as claimed in any one of the preceding claims, further comprising:
a battery storage assembly (118) in communication with the auxiliary power unit (114), the auxiliary power unit (114) charging the battery storage assembly (118) during aircraft climbing and cruising of the aircraft.

11. An apparatus (100) as claimed in any one of claims 1 to 6 and 10, further comprising at least one thrust reverse assembly (126) in communication with the auxiliary power unit (114), wherein the auxiliary power unit (114) is configured to power the at least one thrust reverse assembly (126) to generate a positive thrust during takeoff of the aircraft.

12. A method of removing a boundary layer (134, 158) from an air flow surface (130, 156) of an aircraft (100) comprising:
feeding an auxiliary power unit (114) positioned within a fuselage (106) from a first conduit (138) to remove a portion of the boundary layer (134, 158) during climb and cruise of the aircraft (100);
feeding the auxiliary power unit (114) from a second conduit (140) to provide a freestream air feed (142) during landing of the aircraft (100).

13. A method as claimed in claim 12, further comprising:
feeding the auxiliary power unit (114) at least partially from a third conduit (154) to remove a portion of a second boundary layer (134, 158) from an engine intake surface (156) during takeoff of the aircraft (100).

14. A method as claimed in claim 12 or 13, further comprising:
powering a reverse thrust assembly (126) using the auxiliary power unit (114) during landing of the aircraft (100).

15. A method as claimed in any one of claims 12 to 14, wherein the feed from the first conduit (138) and the second conduit (140) is controlled by a variable position member (144, 152) switching flow between the first and second conduit (138, 140) into the auxiliary power unit (114).

## Patentansprüche

1. Vorrichtung (100), umfassend:
ein Hilfstriebwerk (114) zur Positionierung innerhalb eines Rumpfs (106) eines Flugzeugs, wobei das Flugzeug eine Luftströmungsoberfläche (130, 156) mit einer Grenzschicht (134, 158) von strömendem Fluid umfasst, wenn Außenluft (132) entlang der Luftströmungsoberfläche (130, 156) strömen gelassen wird;
einen ersten Kanal (138) zwischen dem Hilfstriebwerk (114) und der Luftströmungsoberfläche (130, 156);
einen zweiten Kanal (140) zwischen dem Hilfstriebwerk (114) und einer Freistromluftzufuhr (142); und
**dadurch gekennzeichnet, dass** sie ferner umfasst:
ein bewegliches Glied (144, 152), das so ausgestaltet ist, dass es sich bewegt zwischen einer ersten Stellung (146), die für das Strömen zumindest eines Teils der Grenzschicht (134, 158) durch den ersten Kanal (138) zu dem Hilfstriebwerk (114) während des Steigflugs oder/und der Reise des Flugzeugs sorgt, und einer zweiten Stellung (148), die für ein Strömen der Freistromluftzufuhr (142) durch den zweiten Kanal (140) zu dem Hilfstriebwerk (114) während des Starts oder/und der Landung des Flugzeugs sorgt.

2. Vorrichtung (100) nach Anspruch 1, ferner umfassend:
eine Mehrzahl von Grenzschichtausströmschlitzen (136), die auf der Luftströmungsoberfläche (130) positioniert sind und den ersten Kanal (138) in Verbindung mit der Grenzschicht (134) setzen.

3. Vorrichtung (100) nach Anspruch 2, wobei die Mehrzahl von Grenzschichtausströmschlitzen (136) auf einer Triebwerksgondel (112) oder/und einer Triebwerksaufhängung (110) positioniert ist.

4. Vorrichtung (100) nach einem der Ansprüche 1 bis 3, wobei das bewegliche Glied (144, 152) so ausgestaltet ist, dass es sich in die zweite Stellung (148) bewegt, um für das Strömen der Freistromluftzufuhr (142) durch den zweiten Kanal (140) zu dem Hilfstriebwerk (114) während eines Schubumkehrbetriebs des Flugzeugs zu sorgen.

5. Vorrichtung (100) nach einem der vorangehenden Ansprüche, ferner umfassend:
eine Triebwerksansaugoberfläche (156) mit einer zweiten Grenzschicht (158) von strömendem Fluid, das sich über sie bewegt; und
einen dritten Kanal (154) zwischen dem Hilfstriebwerk (114) und der Triebwerksansaugoberfläche (156), wobei das bewegliche Glied (144, 152) so ausgestaltet ist, dass es sich in eine dritte Stellung bewegt, die für das Strömen zumindest eines Teils der zweiten Grenzschicht (158) durch den dritten Kanal (154) zu dem Hilfstriebwerk (114) während des Starts des Flugzeugs sorgt.

6. Vorrichtung (100) nach Anspruch 5, wobei das bewegliche Glied (144, 152) ein Glied mit variabler Stellung (152) umfasst, das die Strömung aus sowohl dem ersten Kanal (138) als auch dem dritten Kanal (154) in das Hilfstriebwerk (114) dosiert.

7. Vorrichtung (100) nach einem der vorangehenden Ansprüche, ferner umfassend:
mindestens eine Schubumkehrbaugruppe (126), die in Verbindung mit dem Hilfstriebwerk (114) steht, wobei das Hilfstriebwerk (114) die Schubumkehrbaugruppe (126) während der Landung des Flugzeugs antreibt.

8. Vorrichtung (100) nach Anspruch 7, wobei das Hilfstriebwerk (114) die mindestens eine Schubumkehrbaugruppe (126) elektrisch antreibt.

9. Vorrichtung (100) nach Anspruch 7, wobei das Hilfstriebwerk (114) die mindestens eine Schubumkehrbaugruppe (126) mechanisch antreibt.

10. Vorrichtung (100) nach einem der vorangehenden Ansprüche, ferner umfassend:
eine Batteriespeicherbaugruppe (118), die in Verbindung mit dem Hilfstriebwerk (114) steht, wobei das Hilfstriebwerk (114) die Batteriespeicherbaugruppe (118) während des Steigflugs des Flugzeugs und der Reise des Flugzeugs auflädt.

11. Vorrichtung (100) nach einem der Ansprüche 1 bis 6 und 10, ferner umfassend mindestens eine Schubumkehrbaugruppe (126), die in Verbindung mit dem Hilfstriebwerk (114) steht, wobei das Hilfstriebwerk (114) so ausgestaltet ist, dass es die mindestens eine Schubumkehrbaugruppe (126) so antreibt, dass sie während des Starts des Flugzeugs einen positiven Schub erzeugt.

12. Verfahren zur Entfernung einer Grenzschicht (134, 158) von einer Luftströmungsoberfläche (130, 156) eines Flugzeugs (100), umfassend:
Speisen eines innerhalb eines Rumpfs (106) positionierten Hilfstriebwerks (114) aus einem ersten Kanal (138), um einen Teil der Grenzschicht (134, 158) während des Steigflugs und der Reise des Flugzeugs (100) zu entfernen;
Speisen des Hilfstriebwerks (114) aus einem zweiten Kanal (140), um eine Freistromluftzufuhr (142) während der Landung des Flugzeugs (100) bereitzustellen.

13. Verfahren nach Anspruch 12, ferner umfassend:
Speisen des Hilfstriebwerks (114) zumindest teilweise aus einem dritten Kanal (154), um einen Teil einer zweiten Grenzschicht (134, 158) von einer Triebwerksansaugoberfläche (156) während des Starts des Flugzeugs (100) zu entfernen.

14. Verfahren nach Anspruch 12 oder 13, ferner umfassend:
Antreiben einer Schubumkehrbaugruppe (126) unter Verwendung des Hilfstriebwerks (114) während der Landung des Flugzeugs (100).

15. Verfahren nach einem der Ansprüche 12 bis 14, wobei die Speisung aus dem ersten Kanal (138) und dem zweiten Kanal (140) durch ein Glied mit variabler Stellung (144, 152) gesteuert wird, das die Strömung zwischen dem ersten und dem zweiten Kanal (138, 140) in das Hilfstriebwerk (114) umschaltet.

## Revendications

1. Appareil (100) comprenant :
une unité d'alimentation auxiliaire (114) pour se positionner à l'intérieur d'un fuselage (106) d'un aéronef, ledit aéronef comprenant une surface d'écoulement d'air (130, 156) ayant une couche limite (134, 158) de fluide mobile lorsque l'air extérieur (132) s'écoule le long de la surface d'écoulement d'air (130, 156) ;
un premier conduit (138) entre l'unité d'alimentation auxiliaire (114) et la surface d'écoulement d'air (130, 156) ;
un deuxième conduit (140) entre l'unité d'alimentation auxiliaire (114) et une alimentation d'air à écoulement non perturbé (142) ; et
**caractérisé en ce qu'**il comprend en outre :
un élément mobile (144, 152) configuré pour se déplacer entre une première position (146) qui fournit le passage de la au moins une partie de la couche limite (134, 158) à travers le premier conduit (138) jusqu'à l'unité auxiliaire (114) pendant au moins l'une parmi l'ascension et la croisière de l'aéronef, et une deuxième position (148) qui fournit un passage de l'alimentation d'air à écoulement non perturbé (142) à travers le deuxième conduit (140) jusqu'à l'unité d'alimentation auxiliaire (114) pendant au moins l'un parmi le décollage et l'atterrissage de l'aéronef.

2. Appareil (100) selon la revendication 1, comprenant en outre :
une pluralité de fentes de purge de couche limite (136) positionnées sur la surface d'écoulement d'air (130) et plaçant le premier conduit (138) en communication avec la couche limite (134) .

3. Appareil (100) selon la revendication 2, dans lequel la pluralité de fentes de purge de couche limite (136) sont positionnées sur au moins l'un parmi une nacelle (112) et un pylône (110).

4. Appareil (100) selon l'une quelconque des revendications 1 à 3, dans lequel l'élément mobile (144, 152) est configuré pour passer dans la deuxième position (148) pour fournir le passage de l'alimentation d'air à écoulement non perturbé (142) à travers le deuxième conduit (140) jusqu'à l'unité d'alimentation auxiliaire (114) pendant un mode d'inversion de poussée de l'aéronef.

5. Appareil (100) selon l'une quelconque des revendications précédentes, comprenant en outre :
une surface d'admission de moteur (156) ayant une seconde couche limite (158) pour déplacer le fluide se déplaçant d'un côté à l'autre de cette dernière ; et
un troisième conduit (154) entre l'unité d'alimentation auxiliaire (114) et la surface d'admission de moteur (156), l'élément mobile (144, 152) étant configuré pour passer dans une troisième position qui fournit le passage de la au moins une partie de la seconde couche limite (158) à travers le troisième conduit (154) jusqu'à l'unité d'alimentation auxiliaire (114) pendant le décollage de l'aéronef.

6. Appareil (100) selon la revendication 5, dans lequel l'élément mobile (144, 152) comprend un élément à position variable (152) proportionnant l'écoulement à partir du premier conduit (138) et du troisième conduit (154) dans l'unité d'alimentation auxiliaire (114).

7. Appareil (100) selon l'une quelconque des revendications précédentes, comprenant en outre :
au moins un ensemble d'inversion de poussée (126) en communication avec l'unité d'alimentation auxiliaire (114), l'unité d'alimentation auxiliaire (114) alimentant l'ensemble d'inversion de poussée (126) pendant l'atterrissage de l'aéronef.

8. Appareil (100) selon la revendication 7, dans lequel l'unité d'alimentation auxiliaire (114) alimente le au moins un ensemble d'inversion de poussée (126) par voie électrique.

9. Appareil (100) selon la revendication 7, dans lequel l'unité d'alimentation auxiliaire (114) alimente le au moins un ensemble d'inversion de poussée (126) par voie mécanique.

10. Appareil (100) selon l'une quelconque des revendications précédentes, comprenant en outre :
un ensemble de stockage de batterie (118) en communication avec l'unité d'alimentation auxiliaire (114), l'unité d'alimentation auxiliaire (114) chargeant l'ensemble de stockage de batterie (118) pendant l'ascension de l'aéronef et pendant la croisière de l'aéronef.

11. Appareil (100) selon l'une quelconque des revendications 1 à 6 et 10, comprenant en outre au moins un ensemble d'inversion de poussée (126) en communication avec l'unité d'alimentation auxiliaire (114), dans lequel l'unité d'alimentation auxiliaire (114) est configurée pour alimenter le au moins un ensemble d'inversion de poussée (126) afin de générer une poussée positive pendant le décollage de l'aéronef.

12. Procédé pour retirer une couche limite (134, 158) d'une surface d'écoulement d'air (130, 156) d'un aéronef (100) comprenant les étapes consistant à :
alimenter une unité d'alimentation auxiliaire (114) positionnée à l'intérieur d'un fuselage (106) à partir d'un premier conduit (138) pour retirer une partie de la couche limite (134, 158) pendant l'ascension et la croisière de l'aéronef (100) ;
alimenter l'unité d'alimentation auxiliaire (114) à partir d'un deuxième conduit (140) pour fournir une alimentation d'air à écoulement non perturbé (142) pendant l'atterrissage de l'aéronef (100).

13. Procédé selon la revendication 12, comprenant en outre l'étape consistant à :
alimenter l'unité d'alimentation auxiliaire (114) au moins partiellement à partir d'un troisième conduit (154) pour retirer une partie d'une seconde couche limite (134, 158) d'une surface d'admission de moteur (156) pendant le décollage de l'aéronef (100) .

14. Procédé selon la revendication 12 ou 13, comprenant en outre l'étape consistant à :
alimenter un ensemble d'inversion de poussée (126) en utilisant l'unité d'alimentation auxiliaire (114) pendant l'atterrissage de l'aéronef (100).

15. Procédé selon l'une quelconque des revendications 12 à 14, dans lequel l'alimentation du premier conduit (138) et du second conduit (140) est commandée par un élément à position variable (144, 152) commutant l'écoulement entre les premier et deuxième conduits (138, 140) dans l'unité d'alimentation auxiliaire (114).
